# EUROPEAN PATENT SPECIFICATION

(11) **EP 1 965 009 B1**
(45) Date of publication and mention of the grant of the patent: **25.07.2012**
(21) Application number: 08380013.6
(22) Date of filing: 23.01.2008
(51) Int. Cl.: E05F 15/00, E05F 15/16, F16P 3/12, G08C 25/02, H04Q 9/00

(54) **Automatic door system with safety strip and process implementing the said system**
Automatiktürsystem mit Sicherheitsstreifen und Verfahren zur Anwendung besagten Systems
Système de porte automatique doté d'une bande de sécurité et procédé pour la mise en oeuvre d'un tel système

(30) Priority: 01.02.2007 ES 200700266
(43) Date of publication of application: 03.09.2008
(73) Proprietor: JCM Technologies, S.A., 08500 Vic (Barcelona) (ES)
(72) Inventor: Renalias Zueras, Ricard, 08242 Manresa (Barcelona) (ES); Beringues Algue, Jordi, 17003 Girona (ES)
(74) Representative: Durán Moya, Luis-Alfonso

(56) References cited:
- EP-A1- 1 598 518
- US-A- 5 412 297
- US-A- 5 596 840
- US-B1- 6 225 768

## Description

This invention relates to an automatic door system with a safety strip and a process for implementing said system.

The official standard for garage doors limits the force which can be exerted by the automatic door in the event of collision with an object or a person in order to prevent that object or person from becoming trapped.

In order to achieve effective force limitation, the fitting of a pressure sensor, known as a "safety strip", located at the end portions of the moving parts of the door is resorted to. This safety strip or strips must be connected to the operating panel to inform the system about eventual collisions.

However, use of a moving sensor or strip gives rise to another problem of a technical nature because an electrical connection has to be made between a moving part and the operating panel. This is normally resolved by using spiral cables, but over time these become damaged or are torn out through an incorrect operation.

In order to overcome this problem, the provision of a wireless transmitter on the moving part of the door and a receiver connected to the door motor, generally through the intermediary of the door's control panel, is known.

For example, document EP1529913 discloses a system of this type in which the transmitter and the receiver communicate through infrared. In addition to other disadvantages which will be described below, this system has the disadvantage that the transmitter and the receiver must remain in line at all times; as a result of which the said system cannot be used for any type of automatic door.

Document WO 03/069352 discloses a system in which the transmitter and receiver communicate through radio frequency. The communication protocols are one-way.

Document GB2260164 discloses another wireless system for one-way communication.

These systems have two basic disadvantages. One disadvantage is the high unloading of the transmitter's battery, which requires very frequent maintenance. Another also significant disadvantage is that it does not permit multiple strips to be fitted to the same door, which is sometimes necessary, as occurs in the case of sliding doors.

Document EP 1598518 discloses a radio frequency system for one-way communication in which in order to mitigate the problem of transmitter battery consumption a movement sensor and a position sensor are incorporated in the system, which complicates the system and leaves the problem of the inclusion of various pressure sensors on the same door unresolved.

Document US 6,225,768 B1 discloses a radio frequency system with a diagnose function for operating a door and a motor which detects and reacts to various hazard conditions, nevertheless the document US 6,225,768 B1 does not have a state to reduce battery consumption when the device is not active.

In order to solve the abovementioned problems this invention comprises an automatic door system with a safety strip which comprises:
- an automatic door provided with a motor,
- at least one safety pressure sensor or strip located on one moving end portion of the door,
- at least one radio frequency transmitter device located on a moving part of the door, to transmit the status of the said sensor or sensors,
- a fixed radio frequency receiver to receive radio frequency signals originating from the transmitter or transmitters,
- a motor control device connected to the fixed radio frequency receiver,
characterised in that:
- the transmitter has means to pass into a secondary state of lower energy consumption or a dormant state of a radio frequency receiver and means to pass from the secondary state to a principal state when it receives a radio frequency signal originating from the fixed receiver,
- the fixed receiver has a fixed radio frequency transmitter, means to require the transmitter or transmitters to send a state signal and blocking means depending upon the state of the transmitter or transmitters.

The system according to this invention provides a solution to the abovementioned problems by providing a system which uses a two-way communications strategy via radio frequency, in which the moving transmitters have a secondary energy-saving state which they abandon when a signal is sent by the fixed receiver. The system according to this invention makes it possible to combine different safety strips with a single receiver, and furthermore achieves a considerable saving in energy for the moving transmitters.

In this preferred way the transmitter comprises a controller, a transmitter/receiver or transceiver, a push-button, a battery and a safety strip reader circuit. For its part, and again in a preferred way, the receiver comprises a controller, a transmitter/receiver, a push-button, a warning device to give notice of malfunction conditions in the system, for example a buzzer, a control output and a power input.

In a likewise preferred way both the receiver and the transmitter emit a reception confirmation signal once a radio frequency signal originating from the receiver or the transmitter or transmitters has been received. Through this checking strategy the transmitter "knows" whether its message has reached its destination and can repeat it as many times as is necessary, which increases the safety of the door.

In a specially preferred embodiment the transmitter or transmitters have means to check the status of the sensor, activating the said sensor at predetermined intervals.

This invention also comprises a process for operating a system according to this invention, characterised in that on receipt of a command to start movement the fixed receiver sends a command to the transmitter or transmitters so that they pass from a secondary energy-saving state to a principal state and send a check signal to the fixed receiver, blocking the movement of the door if the fixed receiver does not receive the check signals within a predetermined time.

Preferably the transmitter or transmitters can carry out a check test on the sensor, sending a positive check signal only if the sensor check test detects no malfunctions in the same.

Again preferably, furthermore, the transmitter or transmitters carry out a check test on the sensor at predetermined intervals, sending a negative check signal to the receiver if the test detects any malfunction in the sensor.

For a better understanding of the invention, drawings of an embodiment of the invention are appended by way of an explanatory non-restrictive example.
Figure 1 shows diagrammatically the elements of an embodiment of a system according to the invention.
Figure 2 shows the elements diagrammatically.
Figures 3 and 4 represent sensor test signals before a manoeuvre is carried out, with a positive and negative result respectively.

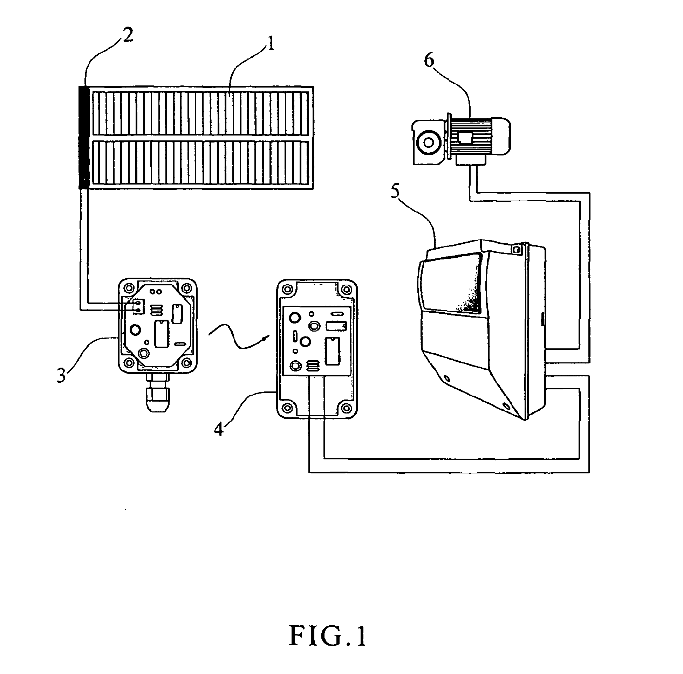

Figure 1 shows an automated moving door -1- operated by means of a motor -6- which has a safety strip or safety sensor -2-. Strip -2- is connected to a transmitter -3-located on the moving part of the door which communicates by radio frequency with a receiver -4- connected to the control panel -5- for the motor -6- operating door -1-.

Strip -2- comprises a pressure sensor which may comprise a connecting cable, a rubber with a non-resistive conductor and a resistance, for example 8K2, to close the circuit. If the safety strip is undeformed it has a resistance 8K2. If any contact with an object occurs the conductor in the rubber short circuits and the strip comes to have a lower resistance, close to 0 ohms.

Transmitter -3- acts as an interface detecting the state of the safety strip and transmitting this through radio frequency. Transmitter -3- may comprise a controller, a transceiver (transmitter/receiver), a push-button and a powering battery.

Receiver -4- acts as a controller for transmitter - 3-, and may receive information from one or more transmitters -3-. Receiver -4- may place the system in a safe state, preventing door -1- from moving if necessary. The receiver may comprise a controller, a transceiver, a push-button, a buzzer, a power supply and its corresponding output or outputs.

Operating panel -5- is responsible for operating motor -6-. It is also the ultimate component responsible for responding if an obstacle is detected, this being communicated to it by strip -2-, transmitter -3-, receiver -4-.

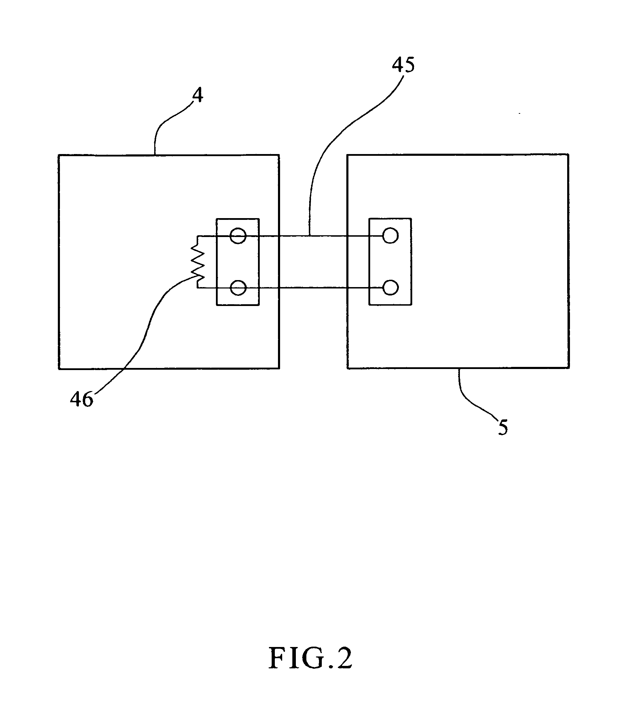

Preferably connection -45- between receiver -4- and operating panel -5- is of the resistive type, with a resistance -46- (see Figure 2) such that the operating panel can make a check, especially before starting an action, to rule out possible malfunctioning of receiver -4. In fact resistance -**46**-, which has a known value, can provide a check that the cable has not suffered any short circuit or been cut at any time.

A preferred manner of operation of the system described is as follows:

A preferred communication strategy to ensure correct transfer of information between transmitter -3- and receiver -4- is a two-way system comprising "LBT" (listen before transmitting) and "ACK" (transmission of confirmation after receipt) protocols.

If confirmation is not received, the elements will preferably repeat the transmission.

Preferably receiver -4- has knowledge in an electronic memory of the various transmitters -3- which have to be controlled.

Transmitter -3- is normally in a secondary energy-saving state, "dormant state", to save battery. The transmitter is configured to wake up at regular intervals, for example:
- It checks the state of the strip every 10 milliseconds. If nothing has changed, it returns to the dormant state. If a change has occurred transmitter -3- informs receiver -4-.
- At a specific interval (which according to this invention may be less than 0.75 s) it listens via the transceiver. If it does not receive any request proceeding from receiver -4- it again returns to the dormant state.
- At intervals of more than 3 seconds, more preferably 15 seconds, and even more preferably 20 seconds or more, it sends its state to receiver 4.

Receiver -4- preferably carries out the following actions.
- If it receives a signal originating from any of transmitters -3- present in its memory, it evaluates that signal and activates the safe state of the system.
- If in the determined interval (20 seconds) it does not receive the state of all transmitters -3- in memory, it activates the safe state of the system.
- When the operating panel requires that the door be operated, the receiver transmits a request to all transmitters -3- by radio frequency so that they carry out a state test on sensors -2- and respond.

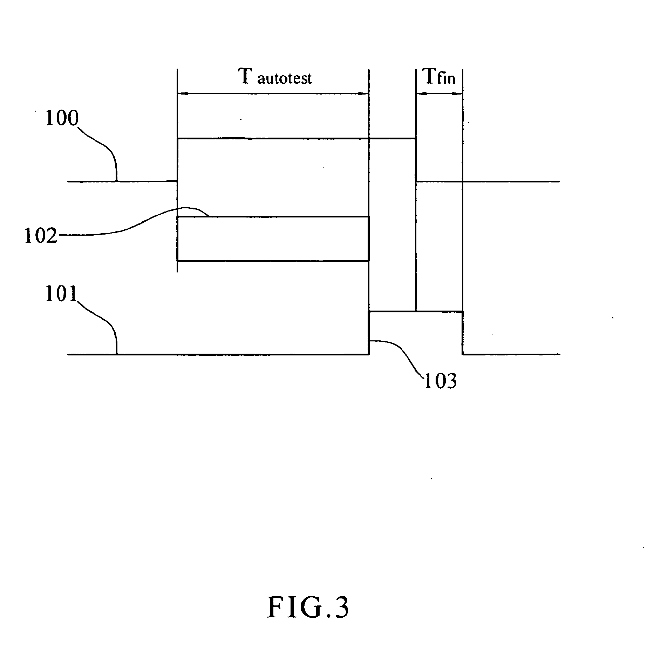

Figure 3 shows the signals from a state check test with a positive result.

Signal -100- represents for example the time for the transmission of a command for a test to be carried out to transmitters -3- and transmission of its result by radio frequency, which occurs during a time -102-. Once the result of the self-test has been received, the receiver activates output -103- which enables panel -5- to carry out the operation.

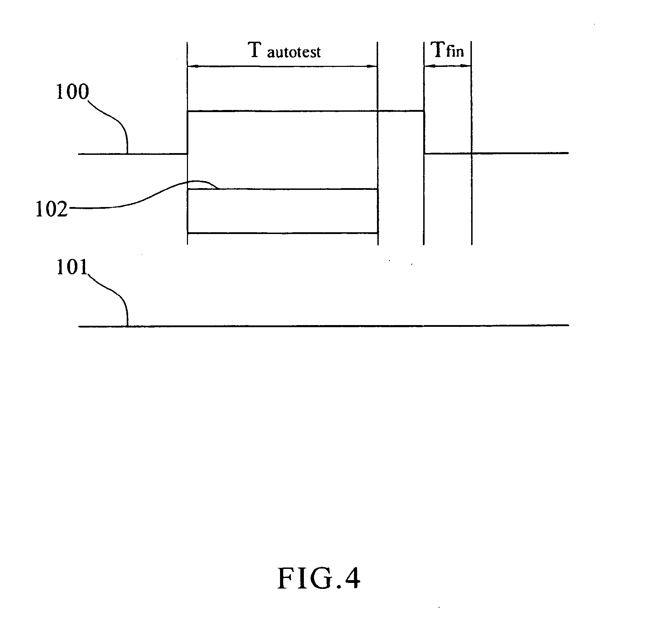

Figure 4 represents a case in which the test fails, and there is no transmission of a positive state test.

Also, preferably, each transmitter -3- will provide information of the status of the battery charge at each transmission in such a way that centralised information can be held and an alarm can be generated before malfunctioning occurs.

Although the invention has been described in relation to preferred embodiments, these must not be regarded as restricting the invention, which will be defined by the following claims.

## Claims

1. Automatic door system with a safety strip (2) comprising:
- an automatic door (1) equipped with a motor (6),
- at least one pressure sensor, located at one moving end portion of the door, said sensor being the safety strip (2)
- at least one radio frequency transmitting device (3), located in a moving part of the door, said transmitting device including a transmitter to transmit the state of the said sensor or sensors,
- a fixed radio frequency receiving device (4) including a receiver to receive radio frequency signals originating from said transmitting device or devices (3),
- a motor control device (5) connected to the fixed radio frequency receiving device (4), wherein:
- the transmitting device (3) further includes means to change to a secondary energy-saving state, a radio frequency receiver and means to pass from the secondary state to a principal state,
**characterised in that**:
- the fixed receiving device (4) further includes a fixed radio frequency transmitter configured to send a signal requiring the transmitting device (3) to send a sensor state signal and means for blocking the movement of the door (1) according to the sensors state signal received from said transmitting device (3),
- the transmitting device (3) is configured to change to said principal state when it receives a radio frequency signal originating from the fixed receiving device (4).

2. A system according to claim 1, **characterised in that** the transmitter comprises:
- an electronic controller
- a transmitter/receiver,
- a push-button,
- a battery,
- a safety strip reader circuit.

3. A system according to claim 1 or 2, **characterised in that** the receiver comprises:
- an electronic controller,
- a transmitter/receiver,
- a push-button,
- a warning device,
- a control output,
- a power input.

4. A system according to claim 3, **characterised in that** the warning device is a buzzer.

5. A system according to any one of claims 1 to 4, **characterised in that** both the receiver and the transmitter check the receipt of radio frequency signals before transmitting a radio frequency signal.

6. A system according to any one of claims 1 to 5, **characterised in that** both the transmitter and the receiver transmit a reception confirmation signal once a radio frequency signal originating from the receiver or the transmitter or transmitters has been received.

7. A system according to any one of claims 1 to 6, **characterised in that** the transmitter or transmitters have means to check the state of the sensor, activating such means at determined intervals.

8. A system according to any one of claims 1 to 7, **characterised in that** the transmitter has means to activate its radio frequency receiver to receive signals at determined intervals.

9. A system according to any one of claims 1 to 8, **characterised in that** the transmitter has means to transmit a state signal at predetermined intervals.

10. A system according to claim 9, **characterised in that** the means to transmit a state signal from the transmitter transmit a state signal at intervals of more than 3 seconds.

11. A system according to claim 10, **characterised in that** the said interval is equal to or greater than 15 seconds.

12. A system according to claim 11, **characterised in that** the said interval is equal to or greater than 20 seconds.

13. A process for operating a system according to any one of claims 1 to 12, **characterised in that** upon an order to initiate movement the fixed receiving device (4) transmits a command to the transmitting device or devices (3) to pass from a secondary energy-saving state to a principal state and send a sensor state signal to the fixed receiving device (4), blocking movement of the door (1) if the fixed receiving device (4) does not receive the sensor state signals within a predetermined time.

14. A process according to claim 13, **characterised in that** the transmitter or transmitters carry out a sensor check test, only sending a positive check signal if the sensor check test does not detect any malfunctions in it.

15. A process according to claim 13 or 14, in which furthermore the transmitter or transmitters carry out a check test on their sensor at predetermined intervals, sending a negative check signal to the receiver if the test detects any malfunction in the sensor.

## Patentansprüche

1. Automatisches Türsystem mit einem Sicherheitsstreifen (2), das umfasst:
- eine automatische Tür (1), die mit einem Motor (6) ausgestattet ist,
- wenigstens einen Drucksensor, der sich an einem sich bewegenden Endabschnitt der Tür befindet, wobei der Sensor der Sicherheitsstreifen (2) ist,
- wenigstens eine Hochfrequenzsendevorrichtung (3), die sich in einem sich bewegenden Teil der Tür befindet, wobei die Sendevorrichtung einen Sender enthält, um den Zustand des oder der Sensoren zu senden,
- eine fixierte Hochfrequenzempfangsvorrichtung (4), die einen Empfänger enthält, um Hochfrequenzsignale, die von der wenigstens einen Sendevorrichtung (3) ausgehen, zu empfangen,
- eine Motorsteuervorrichtung (5), die mit der fixierten Hochfrequenzempfangsvorrichtung (4) verbunden ist, wobei:
- die Sendevorrichtung (3) Mittel, um in einen sekundären Energiesparzustand zu wechseln, einen Hochfrequenzempfänger und Mittel für einen Übergang von dem sekundären Zustand in einen primären Zustand enthält,
**dadurch gekennzeichnet, dass**:
- die fixierte Empfangsvorrichtung (4) ferner einen fixierten Hochfrequenzsender, der konfiguriert ist, um ein Signal zu senden, das die Sendevorrichtung (3) auffordert, ein Sensorzustandssignal zu senden, und Mittel, um die Bewegung der Tür (1) gemäß dem Sensorzustandssignal, das von der Sendevorrichtung (3) empfangen wird, zu blockieren, umfasst,
- die Sendevorrichtung (3) konfiguriert ist, um in den primären Zustand zu wechseln, wenn sie ein von der fixierten Empfangsvorrichtung (4) ausgehendes Hochfrequenzsignal empfängt.

2. System nach Anspruch 1, **dadurch gekennzeichnet, dass** der Sender umfasst:
- eine elektronische Steuereinheit,
- einen Sender/Empfänger,
- einen Druckknopf,
- eine Batterie,
- eine Sicherheitsstreifen-Leseschaltung.

3. System nach Anspruch 1 oder 2, **dadurch gekennzeichnet, dass** der Empfänger umfasst:
- eine elektronische Steuereinheit,
- einen Sender/Empfänger,
- einen Druckknopf,
- eine Warnvorrichtung,
- einen Steuerausgang,
- einen Leistungseingang.

4. System nach Anspruch 3, **dadurch gekennzeichnet, dass** die Warnvorrichtung ein Summer ist.

5. System nach einem der Ansprüche 1 bis 4, **dadurch gekennzeichnet, dass** sowohl der Empfänger als auch der Sender den Empfang von Hochfrequenzsignalen prüfen, bevor ein Hochfrequenzsignal gesendet wird.

6. System nach einem der Ansprüche 1 bis 5, **dadurch gekennzeichnet, dass** sowohl der Sender als auch der Empfänger ein Empfangsbestätigungssignal senden, sobald ein von dem Empfänger oder von dem wenigstens einen Sender ausgehendes Hochfrequenzsignal empfangen worden ist.

7. System nach einem der Ansprüche 1 bis 6, **dadurch gekennzeichnet, dass** der wenigstens eine Sender Mittel enthält, um den Zustand des Sensors zu prüfen, wobei er diese Mittel in bestimmten Intervallen aktiviert.

8. System nach einem der Ansprüche 1 bis 7, **dadurch gekennzeichnet, dass** der Sender Mittel besitzt, um seinen Hochfrequenzempfänger in bestimmten Intervallen zu aktivieren, um Signale zu empfangen.

9. System nach einem der Ansprüche 1 bis 8, **dadurch gekennzeichnet, dass** der Sender Mittel besitzt, um ein Zustandssignal in vorgegebenen Intervallen zu senden.

10. System nach Anspruch 9, **dadurch gekennzeichnet, dass** die Mittel zum Senden eines Zustandssignals von dem Sender ein Zustandssignal in Intervallen von mehr als 3 Sekunden senden.

11. System nach Anspruch 10, **dadurch gekennzeichnet, dass** das Intervall gleich oder größer 15 Sekunden ist.

12. System nach Anspruch 11, **dadurch gekennzeichnet, dass** das Intervall gleich oder größer 20 Sekunden ist.

13. Prozess zum Betreiben eines Systems nach einem der Ansprüche 1 bis 12, **dadurch gekennzeichnet, dass** anhand eines Befehls zum Einleiten einer Bewegung die fixierte Empfangsvorrichtung (4) einen Befehl zu der wenigstens einen Sendevorrichtung (3) sendet, um von einem sekundären Energiesparzustand in einen primären Zustand überzugehen und ein Sensorzustandssignal zu der fixierten Empfangsvorrichtung (4) zu senden, um die Bewegung der Tür (1) zu blockieren, falls die fixierte Empfangsvorrichtung (4) die Sensorzustandssignale nicht innerhalb einer vorgegebenen Zeit empfängt.

14. Prozess nach Anspruch 13, **dadurch gekennzeichnet, dass** der wenigstens eine oder die mehreren Sender einen Sensorprüftest ausführen und nur ein positives Prüfsignal senden, falls der Sensorprüftest darin keinerlei Fehlfunktionen detektiert.

15. Prozess nach Anspruch 13 oder 14, wobei ferner der wenigstens eine Sender einen Prüftest an seinem Sensor in vorgegebenen Intervallen ausführt und ein negatives Prüfsignal zu dem Empfänger sendet, falls der Test irgendeine Fehlfunktion in dem Sensor detektiert.

## Revendications

1. Système de porte automatique doté d'une bande de sécurité (2) comprenant :
- une porte automatique (1) pourvue d'un moteur (6),
- au moins un capteur de pression, situé à une portion d'extrémité mobile de la porte, ledit capteur étant la bande de sécurité (2),
- au moins un dispositif d'émission de radiofréquences (3), situé dans une partie mobile de la porte, ledit dispositif d'émission comprenant un émetteur pour transmettre l'état dudit capteur ou desdits capteurs,
- un dispositif de réception de radiofréquences fixe (4) comprenant un récepteur pour recevoir des signaux de radiofréquences provenant dudit dispositif d'émission ou desdits dispositif d'émission (3),
- un dispositif de commande de moteur (5) relié au dispositif de réception de radiofréquences fixe (4), dans lequel :
- le dispositif d'émission (3) comprend en outre un moyen pour passer dans un état d'économie d'énergie secondaire, un récepteur de radiofréquences et un moyen pour passer de l'état secondaire à un état principal,
**caractérisé en ce que** :
- le dispositif de réception fixe (4) comprend en outre un émetteur de radiofréquences fixe configuré pour envoyer un signal exigeant du dispositif d'émission (3) d'envoyer un signal d'état de capteur et un moyen de blocage du mouvement de la porte (1) en fonction du signal d'état de capteur reçu dudit dispositif d'émission (3),
- le dispositif d'émission (3) est configuré pour passer dans ledit état principal lorsqu'il reçoit un signal de radiofréquences provenant du dispositif de réception fixe (4).

2. Système selon la revendication 1, **caractérisé en ce que** l'émetteur comprend :
- un organe de commande électronique,
- un émetteur-récepteur,
- un bouton-poussoir,
- une batterie,
- un circuit lecteur de bande de sécurité.

3. Système selon la revendication 1 ou 2, **caractérisé en ce que** le récepteur comprend :
- un organe de commande électronique,
- un émetteur-récepteur,
- un bouton-poussoir,
- un dispositif d'avertissement,
- une sortie de commande,
- une entrée de puissance.

4. Système selon la revendication 3, **caractérisé en ce que** le dispositif d'avertissement est une sonnerie.

5. Système selon l'une quelconque des revendications 1 à 4, **caractérisé en ce que** le récepteur et l'émetteur contrôlent la réception de signaux de radiofréquences avant l'émission d'un signal de radiofréquences.

6. Système selon l'une quelconque des revendications 1 à 5, **caractérisé en ce que** l'émetteur et le récepteur transmettent un signal de confirmation de réception une fois qu'un signal de radiofréquences provenant du récepteur ou de l'émetteur ou des émetteurs a été reçu.

7. Système selon l'une quelconque des revendications 1 à 6, **caractérisé en ce que** l'émetteur ou les émetteurs comportent un moyen pour contrôler l'état du capteur, en activant ledit moyen à des intervalles déterminés.

8. Système selon l'une quelconque des revendications 1 à 7, **caractérisé en ce que** l'émetteur comporte un moyen pour activer son récepteur de radiofréquences pour recevoir des signaux à des intervalles déterminés.

9. Système selon l'une quelconque des revendications 1 à 8, **caractérisé en ce que** l'émetteur comporte un moyen pour transmettre un signal d'état à des intervalles prédéterminés.

10. Système selon la revendication 9, **caractérisé en ce que** le moyen pour transmettre un signal d'état de l'émetteur transmet un signal d'état à des intervalles de plus de trois secondes.

11. Système selon la revendication 10, **caractérisé en ce que** ledit intervalle est supérieur ou égal à 15 secondes.

12. Système selon la revendication 11, **caractérisé en ce que** ledit intervalle est supérieur ou égal à 20 secondes.

13. Procédé pour la mise en oeuvre d'un système selon l'une quelconque des revendications 1 à 12, **caractérisé en ce que**, lorsqu'il est ordonné d'entamer un mouvement, le dispositif de réception fixe (4) transmet une commande au dispositif d'émission ou aux dispositifs d'émission (3) pour passer d'un état d'économie d'énergie secondaire à un état principal et envoyer un signal d'état de capteur au dispositif de réception fixe (4), en bloquant le mouvement de la porte (1) si le dispositif de réception fixe (4) ne reçoit pas les signaux d'état de capteur dans un délai prédéterminé.

14. Procédé selon la revendication 13, **caractérisé en ce que** l'émetteur ou les émetteurs effectuent un test de contrôle de capteur, en envoyant un signal de contrôle positif uniquement si le test de contrôle de capteur ne détecte pas de dysfonctionnement dans le capteur.

15. Procédé selon la revendication 13 ou 14, dans lequel en outre l'émetteur ou les émetteurs effectuent un test de contrôle sur leur capteur à des intervalles prédéterminés, en envoyant un signal de contrôle négatif au récepteur si le test détecte un dysfonctionnement dans le capteur.
